# FASCICULE DE BREVET EUROPEEN

(11) **EP 3 732 064 B1**
(45) Date de publication et mention de la délivrance du brevet: **02.02.2022**
(21) Numéro de dépôt: 18833479.1
(22) Date de dépôt: 13.12.2018
(51) Int. Cl.: B60C 9/20, B60C 9/22, B60C 9/28

(54) **ARMATURE DE FRETTAGE D'UN PNEUMATIQUE POUR VEHICULE LOURD DE TYPE GENIE CIVIL**
UMREIFUNGSVERSTÄRKUNG FÜR EINEN REIFEN EINES SCHWERLASTBAUFAHRZEUGS
HOOPING REINFORCEMENT FOR A TYRE OF A HEAVY DUTY CIVIL ENGINEERING VEHICLE

(30) Priorité: 28.12.2017 FR 1763322
(43) Date de publication de la demande: 04.11.2020
(73) Titulaire: COMPAGNIE GENERALE DES ETABLISSEMENTS MICHELIN, 63000 Clermont-Ferrand (FR)
(72) Inventeur: DOMINGO, Alain, 63040 CLERMONT-FERRAND Cedex 9 (FR); ESTENNE, Vincent, 63040 CLERMONT-FERRAND Cedex 9 (FR); KHAYAT, Cédric, 63040 CLERMONT-FERRAND Cedex 9 (FR); CLEMENT, Emmanuel, 63040 CLERMONT-FERRAND Cedex 9 (FR)
(74) Mandataire: Le Cam, Stéphane Georges Elie
(86) Numéro de dépôt international: PCT/FR2018/053252
(87) Numéro de publication internationale: WO 2019/129948

(56) Documents cités:
- EP-A1- 1 787 825
- WO-A1-2016/139348
- WO-A1-2017/105425
- FR-A1- 3 020 016
- US-A1- 2017 028 782

## Description

La présente invention a pour objet un pneumatique radial, destiné à équiper un véhicule lourd de type génie civil, et concerne plus particulièrement l'armature de sommet d'un tel pneumatique.

Typiquement un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un matériau polymérique de type élastomère ou élastomérique appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au moins égaux à 15° et au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'intérieur de l'armature de travail et radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut également être radialement positionnée entre deux couches de travail de l'armature de travail, ou radialement à l'extérieur de l'armature de travail.

L'armature de frettage comprend au moins une couche de frettage et usuellement deux couches de frettage, radialement superposées, formées de renforts métalliques, parallèles entre eux, en formant, avec la direction circonférentielle, des angles au plus égaux à 2.5°, et, de préférence voisins de 0°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa.

Un renfort métallique non extensible est caractérisé par un allongement total At, sous une force de traction égale 10% de la force à rupture Fm, au plus égal à 0.2%. Par ailleurs, un renfort métallique non extensible a un module élastique en extension compris usuellement entre 150 GPa et 200 GPa.

Les renforts métalliques sont enrobés dans un mélange élastomérique. Pour caractériser la couche composite, il est usuel de décrire les propriétés mécaniques du mélange d'enrobage.

Un mélange élastomérique peut être caractérisé mécaniquement, en particulier après cuisson, par ses propriétés dynamiques, telles qu'un module de cisaillement dynamique G^{∗}= (G'²+G"²)^{1/2}, où G' est le module de cisaillement élastique et G" le module de cisaillement visqueux, et une perte dynamique tgδ=G"/G'. Le module de cisaillement dynamique G^{∗} et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élstomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

Le document WO 2016139348 décrit une architecture de pneumatique pour véhicule lourd de génie civil telle que précédemment décrite et comprenant une armature de frettage formée par un enroulement circonférentiel d'une nappe comprenant des renforts métalliques élastiques circonférentiels faisant, avec la direction circonférentielle des angles au plus égaux à 2.5°, ledit enroulement circonférentiel de la nappe s'étendant depuis une première extrémité circonférentielle jusqu'à une deuxième extrémité circonférentielle radialement extérieure à la première extrémité circonférentielle, de façon à former un empilement radial d'au moins deux couches de frettage, l'armature de frettage étant radialement positionnée entre les deux couches de travail d'une armature de travail.

Lors de la fabrication d'un pneumatique tel que décrit par le document WO 2016139348, la couche de frettage est en réalité une nappe comprenant des renforts métalliques élastiques, dite nappe de renforts métalliques, est initialement stockée sur un rouleau. Puis elle est déroulée et posée par enroulement circonférentiel radialement à l'extérieur des couches de pneumatique déjà empilées radialement. La nappe de renforts métalliques est enroulée sur au moins deux tours de façon à réaliser au moins deux couches de frettage radialement superposées, avec un décalage circonférentiel entre l'extrémité de départ de l'enroulement et l'extrémité de fin de l'enroulement de telle sorte que, sur une distance circonférentielle limitée, ou longueur de recouvrement, l'armature de frettage comprend trois couches de frettage. L'enroulement est réalisé de façon continue en utilisant une unique portion de nappe de renforts métalliques. Ainsi l'armature de frettage ne contient aucune discontinuité. Il s'ensuit qu'il peut subsister une portion de nappe de renforts métalliques, sur le rouleau de stockage initial, inutilisable dès lors qu'elle n'a pas une longueur suffisante pour la réalisation de l'armature de frettage en un seul morceau. Cette portion résiduelle de nappe de renforts métalliques, inutilisable en fabrication pour cause de longueur insuffisante, est également appelée chute de nappe. L'existence de telles chutes de nappes, qui entraîne une perte de matière, pénalise le coût de fabrication du pneumatique.

Une solution alternative pour éviter la perte de matière liée ou au recouvrement des extrémités des nappes ou aux chutes, est de réaliser une soudure dite bout à bout. Le raccord de ces chutes se fait en rapprochant les extrémités des deux portions à raccorder. L'espace entre ces deux extrémités est une discontinuité qui est remplie d'un mélange élastomérique de liaison qui solidarise par soudure les deux portions de nappe de renforts métalliques. On parle ici de soudure bout à bout en ce sens qu'il n'y a pas de recouvrement entre les deux portions de nappe

A l'usage, ces deux solutions présentent l'inconvénient de dégrader l'uniformité du pneumatique, et la productivité du procédé.

Les inventeurs se sont donnés pour objectif de diminuer le coût de fabrication d'un pneumatique pour véhicule lourd de génie civil, et, en particulier, celui de son armature de frettage, tout en garantissant le même niveau de performance en endurance de son sommet.

Cet objectif a été atteint par un pneumatique pour véhicule lourd de type génie civil comprenant :
- une armature de sommet, radialement intérieure à une bande de roulement et radialement extérieure à une armature de carcasse;
- l'armature de sommet comprenant une armature de protection, une armature de travail et une armature de frettage;
- l'armature de protection, la plus radialement extérieure dans l'armature de sommet, comprenant au moins une couche de protection, la couche de protection est constituée des renforts métalliques qui forment, avec une direction circonférentielle (XX') tangente à la circonférence du pneumatique, un angle au moins égal à 10° ;
- l'armature de travail comprenant au moins deux couches de travail, chaque couche de travail comprenant des renforts métalliques formant, avec la direction circonférentielle (XX'), un angle au moins égal à 15° et au plus égal à 45°et croisés d'une couche de travail à la suivante,
- l'armature de frettage ayant une largeur axiale au plus égale à la plus petite largeur axiale des deux couches de travail, et comprenant au moins deux couches de frettage qui sont formées à partir de bandelettes constituées chacune de renforts métalliques élastiques qui font avec la direction circonférentielle (XX'), un angle au plus égal à 2.5°,
- chaque couche de frettage est constituée d'une juxtaposition axiale de spires jointives de la bandelette, enroulées circonférentiellement autour de la première couche de travail, radialement la plus intérieure de l'armature de travail,
- la bandelette comprend au moins 8, et au plus 30 renforts consécutifs parallèles et enrobés dans un mélange élastomérique,
- la tension répartie de rupture Nr de la bandelette, dans la direction circonférentielle est au moins égale à 100 daN/mm.

L'idée de l'invention est de remplacer les nappes utilisées pour la fabrication des couches de frettage, par un enroulement hélicoïdal jointif, dans la direction axiale, d'une bandelette autour de la première couche de travail. La bandelette est constituée d'un nombre limité de renforts, par exemple de huit à trente, parallèles, et enrobés dans un mélange élastomérique. La largeur de la bandelette dépend donc, à la fois du diamètre et de l'espacement entre deux renforts consécutifs.

Dans l'état de l'art, certaines couches composites sont constituées de bandelettes, mais elles sont composées, le plus souvent, de renforts textiles comme par exemple, le polyester, le polyamide, l'aramide ou encore toute combinaison de ces fibres.

La bandelette proposée par l'invention se caractérise par des renforts métalliques de gros diamètres allant de 1.5 mm à 3.8 mm. Les renforts sont en réalité des câbles obtenus par assemblage de torons élémentaires selon différents motifs d'arrangements géométriques.

Les inventeurs proposent des câbles en acier dits "à couches" constitués d'une âme centrale et d'une ou plusieurs couches de fils concentriques disposées autour de cette âme. Les câbles à couches les plus utilisés sont essentiellement des câbles de construction "M+N" ou "M+N+P", formés d'une âme de L fil(s) entourée d'au moins une couche de M fils éventuellement elle-même entourée d'une couche externe de N fils.

L'invention propose également un mélange d'enrobage adapté pour une utilisation dans un pneumatique de génie civil pour lequel la maîtrise de la température de fonctionnement est un élément essentiel pour garantir son endurance. La composition du mélange est conçue de manière à minimiser son hystérèse, et les cisaillements subis dans la couche composite.

Afin de garantir l'endurance de l'armature de sommet, les inventeurs ont proposé une épaisseur de mélange d'enrobage minimale de 0.6 mm au dos des câbles, et un pont de mélange entre deux câbles consécutifs de 2.5 mm à 4.4 mm.

Les inventeurs sont parvenus à un compromis technique et économique sur la nature du renfort, son assemblage à partir de torons élémentaires, le mélange d'enrobage pour déterminer la couche composite optimale pour les performances d'endurance et de coût de revient industriel, pour la conception du pneumatique.

En ce qui concerne l'architecture de l'armature de sommet, l'armature de frettage est avantageusement radialement comprise entre deux couches de travail de l'armature de travail.

En effet, une telle architecture permet, grâce à l'utilisation de renforts circonférentiels, situés près de la fibre neutre du sommet, de limiter la déformation du sommet aux épaules. Ceci permet donc d'obtenir à la fois la performance d'endurance au clivage du sommet attendue et la performance de résistance aux chocs visée grâce à un sommet souple au centre apte à supporter la déformation due aux chocs lorsque le véhicule roule sur des obstacles. En effet, lors du franchissement d'un obstacle, le sommet du pneumatique fonctionne comme une poutre dont la fibre neutre se situe entre les couches de travail selon un mode de déformation imposée. La fibre neutre en flexion de l'armature de sommet se situe entre les couches de sommet les plus rigides, à savoir entre les couches de travail. En positionnant les renforts circonférentiels entre ces dites couches de travail, la solution minimise les contraintes et les déformations de flexion associées à cette sollicitation que doivent supporter les renforts circonférentiels.

Le taux de conformation en un point donné de l'armature de frettage est égal au rapport du rayon R dudit point sur le pneumatique conformé et vulcanisé sur le rayon R0 du même point sur le pneumatique non conformé, R et R0 étant mesurés par rapport à l'axe de rotation du pneumatique. En se positionnant sur l'armature de frettage à l'intersection avec le plan équatorial, le ratio de variation relative de rayons (R-R0)/R0 représente l'allongement circonférentiel maximal repris par les renforts métalliques dû au procédé de fabrication. L'élasticité des renforts correctement dimensionnée permet d'anticiper et d'absorber les efforts induits par le procédé de fabrication du pneumatique.

Selon l'invention, chaque couche de frettage est constituée d'une juxtaposition axiale de spires jointives de la bandelette, enroulées circonférentiellement autour de la première couche de travail, radialement la plus intérieure de l'armature de travail.

Lors de la fabrication du pneumatique avec des couches de frettage posées sous forme de nappes, la largeur est déterminée par la capabilité du procédé amont de réalisation de la nappe. La pose de la couche de frettage par juxtaposition d'une bandelette enroulée autour de la première couche de travail libère de cette contrainte de largeur et permet donc d'augmenter la partie frettée du sommet. Cette nouvelle solution de réalisation du frettage du pneumatique améliore les performances du produit en ayant un frettage lus large et plus serré avec des bandelettes au contraire de l'utilisation de nappes. Il s'en suit que les amplitudes de cisaillements aux extrémités des couches de travail sont diminués suffisamment pour en détecter l'effet sur l'endurance du pneumatique.

Encore selon l'invention, la bandelette comprend au moins 8, et au plus 30 renforts métalliques consécutifs parallèles et enrobés dans un mélange élastomérique.

La largeur de la bandelette est le résultat d'un compromis entre les performances du produit et les performances industrielles. Plus la bandelette est étroite, et plus long sera le temps du cycle d'enroulement autour de la première couche de travail. D'un autre côté, la maîtrise de la largeur frétée, et du niveau de serrage est plus aisée avec une bandelette étroite. Les inventeurs ont établi qu'une largeur de la bandelette déterminée par un assemblage de 8 à 30 renforts permet d'optimiser ce compromis, les renforts ayant un diamètre de longueur de 1.9 mm à 3.8 mm.

Toujours selon l'invention, la tension de rupture Nr de la bandelette, dans la direction circonférentielle, est au moins égale à 100 daN/mm.

La tension de rupture de la bandelette correspond à la tension limite que peut supporter la bandelette quand elle est sollicitée en extension dans la direction des renforts. Dans le contexte de l'invention, les renforts sont orientés selon la direction circonférentielle du pneumatique. Le pas de pose qui est la distance entre deux renforts consécutifs dans une coupe méridienne de la bandelette, varie de 2.5 mm à 4.4 mm pour des renforts avec une force de rupture minimale de 250 daN. La tension de rupture minimale de la bandelette s'en déduit avec une valeur de 100 daN/mm.

D'après l'invention, la largeur de la bandelette est au moins égale à 35 mm, et au plus égale à 252 mm. Le diamètre des renforts de la bandelette est au moins égale à 1.9 mm.

La largeur de la bandelette se déduit à partir du diamètre des renforts qui la composent, et de leur pas de pose. L'invention fonctionne notamment pour des renforts de diamètre de 1.9 mm à 4 mm, et des pas de pose qui varient de 2.5 mm à 4.4 mm.

Toujours selon l'invention, le mélange élastomérique d'enrobage des renforts métalliques de la bandelette a une perte viscoélastique Tg δ inférieure ou égale 0.09.

Le mélange d'enrobage des renforts de la bandelette est le siège de déformations de cisaillements importants à la fois dans les plans méridiens et circonférentiels pendant l'utilisation du pneumatique. Ces déformations que subit le mélange élastomérique sont à l'origine de la montée en température de cette zone du pneumatique. La composition de ce mélange doit être adaptée par rapport à ses sollicitations. Les inventeurs ont estimé qu'une perte viscoélastique mesurée par une Tg δ affectée à une valeur de 0.09 garantit le maintien de la température moyenne de fonctionnement de cette zone dans des limites acceptables pour le bon fonctionnement de l'invention. La perte viscoélastique étant mesurée telle que décrite au paragraphe [023].

Préférentiellement, les renforts métalliques de la bandelette sont des câbles multi-torons de structure 1xN comprenant une unique couche de N torons enroulés en hélice, chaque toron comprenant une couche interne de M fils internes enroulés en hélice et une couche externe de P fils externes enroulés en hélice autour de la couche interne.

Selon un premier mode de réalisation des câbles multi-torons, N=3 ou N=4, de préférence N=4. Préférentiellement, le renfort est défini avec 4 torons, mais l'option avec 3 torons est également convenable.

Selon un deuxième mode de réalisation des câbles multi-torons, M=3, 4 ou 5, de préférence M=3.

Selon un troisième mode de réalisation des câbles multi-torons, dans lequel P=7, 8, 9, 10 ou 11, de préférence P=8.

Ces renforts sont conçus pour obtenir de forts allongements sous de faibles charges en sollicitations d'extension. Le choix préférentiel conduit à des renforts du type : 4x(3+8)x0.35, soit des câbles de 44 fils avec un diamètre unitaire de chaque fil de 35 centième de millimètre. L'utilisation de tels renforts améliorent l'endurance des pneumatiques en augmentant la résistance aux efforts de traction lors du passage sur des obstacles.

Son utilisation peut être étendue aux couches de protection, ce qui permet de supporter les déformations locales imposées lors du roulage sur des obstacles. Ces renforts ont un diamètre au moins égal à 3.8 mm et une force à rupture au moins égale à 850 daN. La valeur élevée du diamètre permet d'absorber les déformations de cisaillement de la couche de protection sur une plus grande épaisseur ce qui génère des contraintes de cisaillement plus faibles. La valeur élevée de la force à rupture permet au renfort de supporter des contraintes de rupture plus élevées améliorant ainsi la performance du sommet en endurance aux chocs. Enfin, l'élasticité de ces renforts en phase de fabrication favorise l'expansion du diamètre de pose qu'implique la cuisson des pneumatiques dans un moule.

L'invention ne limite pas aux renforts précédemment étudiés. D'autres assemblages sont possibles comme par exemple le câble 3x(1+6)x0.28, qui représente un renfort avec 21 fils de diamètre unitaire de 28 centièmes de millimètres. Un tel câble a un diamètre de 1.9 mm et une force de rupture de 250 daN.

L'invention concerne également un procédé qui inclut une étape de réalisation de l'armature de carcasse distincte de l'étape de réalisation de l'armature de sommet dans laquelle, les couches de l'armature de sommet y compris les couches de frettage sont posées sur une forme cylindrique puis transférées sur l'armature de carcasse. Les couches de frettage sont obtenues par enroulement circonférentiel et hélicoïdal axial de la bandelette (8) sur la première couche de travail (61), puis radialement extérieure à l'armature de frettage sont posées la deuxième couche de travail (62), l'armature de protection et enfin la bande de roulement.

L'enroulement hélicoïdal, jointif axial de la bandelette (8) autour de la première couche de travail 61) peut être réalisé de différentes manières. Selon un mode de réalisation de l'invention, sont successivement réalisés un premier tour complet d'enroulement circonférentiel de la bandelette (8) au niveau d'une première extrémité axiale de la couche de frettage, puis un enroulement hélicoïdal jointif de la bandelette (8), selon la direction axiale jusqu'à une deuxième extrémité axiale de la couche de frettage, et un dernier tour complet d'enroulement circonférentiel de la bandelette (8) au niveau de la deuxième extrémité axiale de la couche de frettage.

L'invention n'est pas limitée au procédé précédemment décrit pour réaliser l'armature de frettage. Elle concerne tout mode d'enroulement hélicoïdal de la bandelette autour de la première couche de travail (61) sans sortir du cadre de l'invention telle que définie par les revendications ci-jointes.

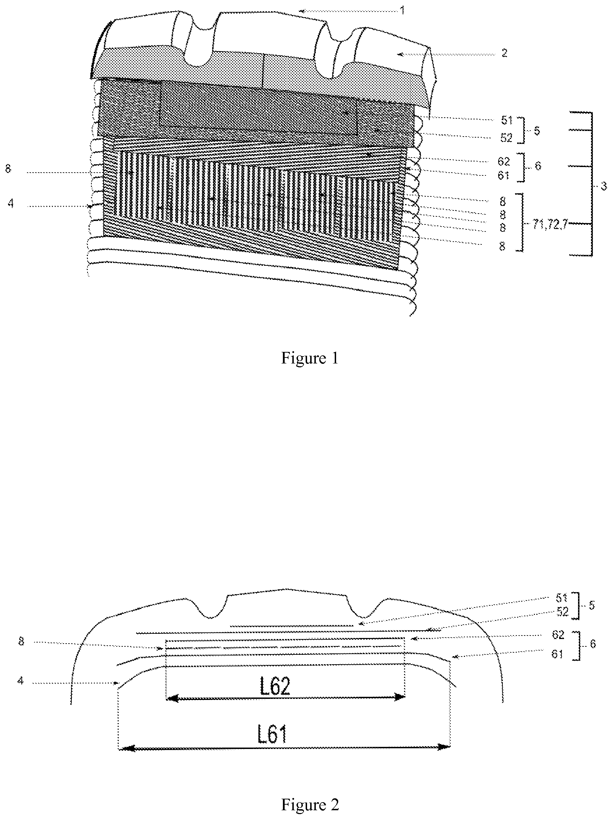

L'invention est illustrée par les figures 1 à 4, non représentées à l'échelle pour en faciliter la compréhension. La figure 1 représente une vue écorchée en perspective du sommet d'un pneumatique 1 selon l'invention présentant :
- une bande de roulement 2, radialement extérieure à une armature de carcasse 4,
- l'armature de sommet 3 comprenant une armature de protection 5, une armature de travail 6 et une armature de frettage 7,
- l'armature de protection 5, la plus radialement extérieure dans l'armature de sommet 3, comprenant deux couches de protection (51, 52), chaque couche de protection (51, 52) comprenant des renforts métalliques formant, avec une direction circonférentielle (XX') tangente à la circonférence du pneumatique, un angle au moins égal à 10°,
- l'armature de travail 6 comprenant deux couches de travail (61, 62), chaque couche de travail (61, 62) comprenant des renforts métalliques formant, avec la direction circonférentielle (XX'), un angle au moins égal à 15° et au plus égal à 45°et croisés d'une couche de travail à la suivante,
- l'armature de frettage 7 étant constituée d'une juxtaposition axiale de spires jointives d'une bandelette (8), enroulées circonférentiellement autour de la première couche de travail. Sur la figure 1, les bandelettes sont disjointes, mais en réalité, elles sont jointives. La deuxième couche 71, est superposée sur la deuxième 72.

La figure 2 représente une vue dans la plan méridien qui permet d'identifier les largeurs des couches. Notamment, la largeur de la deuxième couche de travail qui correspond à la largeur maximale de la couche de frettage.

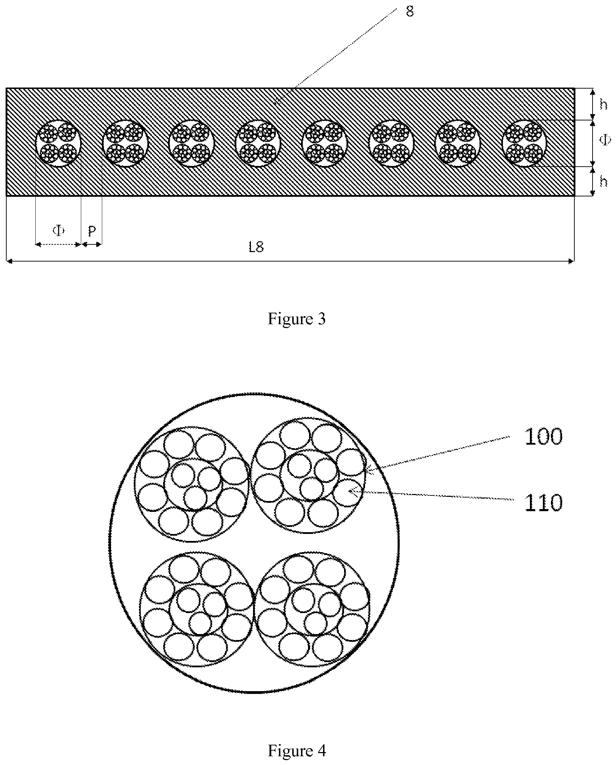

La figure 3 représente la bandelette où sont identifiés le diamètre du renfort, le pas de pose P des renforts ainsi que l'épaisseur h de la gomme d'enrobage qui est supérieure ou égale à 0.6 mm. Le diamètre Φ des renforts varie de 1.9 mm à 3.8 mm. La largeur L8 de la bandelette dépend du diamètre, et du pas de pose des renforts qui est la distance P entre deux renforts consécutifs. Typiquement la largeur L8 est définie pour un nombre de renforts allant de 8 à 30, et le pas de pose va de 2.5 mm à 4.4 mm. Sur la figure 3, la bandelette est représentée pour un nombre de 8 renforts. La largeur de la bandelette peut varier de 35 mm à 252 mm.

La figure 4 représente un renfort de la bandelette constituée de 4 torons (100) composé chacun d'une couche interne de 3 fils, et d'une couche externe de 8 fils (110).

L'invention a été réalisée sur un pneumatique pour véhicule lourd de génie civil de dimension 59/80R63. Le pneumatique selon l'invention diffère du pneumatique de l'état de référence par la réalisation de l'armature de frettage. Pour le pneumatique de référence, l'armature de frettage a été obtenue par un enroulement continu d'une nappe métallique sur deux tours autour de la première couche de travail. Pour l'invention, le frettage est constituée d'une juxtaposition axiale de spires jointives d'une bandelette (8), enroulées circonférentiellement autour de la première couche de travail.

L'invention se distingue entre autres de l'état de l'art par l'utilisation de bandelettes formées de renforts métalliques élastiques de diamètres importants allant de 1.9 mm à 3.8 mm, avec une force de rupture qui va de 250 daN à 850 daN.

Le mélange élastomérique d'enrobage des renforts de la bandelette sont typiquement de la composition suivante, mais non exclusivement, regroupée dans le tableau 1 :

**Tableau 1**

| Composition | Elastomère NR (Natural Rubber) | Noir de carbone N326 | Antioxydant | ZnO | Acide stéarique | Soufre | DCBS | Résine OPF Epoxy | Sel de cobalt | CTP |
|---|---|---|---|---|---|---|---|---|---|---|
| Mélange élastomérique de la bandelette | 100 | 47 | 1.5 | 7.5 | 0.9 | 5.63 | 0.8 | 0.5 | 1.5 | 0.15 |

A cette composition du mélange d'enrobage correspondent, les propriétés mécaniques regroupées dans le tableau 2 suivant :

**Tableau 2**

| Résultats | Mélange élastomérique d'enrobage de la bandelette |
|---|---|
| Shore A | 67 |
| Ma10 | 5.2 Mpa |
| MA100 | 2.6 MPa |
| Tg(δ) | 0.09 |
| G' (10%) | 2.12 Mpa |

La bandelette a une épaisseur pouvant varier de 3.1 mm à 5 mm. L'épaisseur du mélange d'enrobage au dos des renforts peut aller jusqu'à 0.6 mm. Pour une armature de frettage avec deux couches, l'épaisseur cumulée du mélange au dos des renforts peut être supérieure à 2.4 mm. Les dimensions des pneus concernés par l'invention ont un diamètre de jante pouvant atteindre 63 pouces. On en déduit que le volume du mélange d'enrobage devient significatif, et que donc son choix doit être optimisé en ce qui concerne son hystérèse, sa dureté shore A et sa rigidité.

Le module de rigidité statique du mélange d'enrobage de la bandelette a une valeur de 5.2 Mpa à 10% de déformation et une valeur de 2.6 Mpa à 100% de déformation. En dynamique, à 10% de déformation, le module de rigidité dynamique a une valeur de 2.12 Mpa.

L'endurance d'un pneumatique du génie civil est directement corrélée à la température de fonctionnement provoquée par la perte viscoélastique des mélanges élastomériques. Les inventeurs ont établi que la perte viscoélasique du mélange d'enrobage de la bandelette doit avoir un niveau de Tg δ environ égal à 0.09 pour un fonctionnement correct de l'invention.

Un autre avantage de l'invention concerne le coût de revient industriel qui est sensiblement inférieur pour une armature de frettage posée en bandelette par rapport à la configuration de référence avec l'utilisation de nappes. Le cycle de fabrication de l'armature de frettage avec bandelette est plus court, et la perte de matière liée aux chutes est plus faible. Mais un autre gain procédé apparaît avec la souplesse apportée par cette solution, en ce qui concerne la largeur du sommet à fretter, et la maîtrise du niveau de serrage de la frette. Les limitations de largeur liées aux procédés amont d'obtention des nappes sont levées lors d'une fabrication avec bandelette.

L'invention apporte également une amélioration en endurance du pneumatique. La séparation des couches de travail (61,62) de l'armature de sommet (3) est l'un des modes de défaillance habituels de ces types de pneumatiques. Quand les cisaillements dans les plans circonférentiels et dans les plans méridiens sont trop importants, des fissures finissent par apparaître, puis se propagent jusqu'à la séparation des nappes ce qui entraîne la déchéance brutale du pneumatique. Le résultat suivant montre que le frettage avec l'utilisation de la bandelette permet d'avoir une plus grande largeur frettée qui s'accompagne d'une baisse de 14% du niveau de cisaillement dans le mélange d'enrobage des couches de travail :

**Tableau N°3**

| | Largeur frettée | Elongation circonférentielle |
|---|---|---|
| Frettage avec nappes | 520 mm | 100 |
| Frettage avec bandelette | 740 mm | 114 |

Une autre amélioration de l'invention concerne les forces de poussées du pneumatique en trajectoire courbe. La rigidité de dérive est en lien avec les forces de poussée générées par le pneumatique dans des virages. Là encore, le frettage par bandelette apporte une amélioration significative d'environ 17% de gain par rapport à la référence frettée avec une nappe, comme indiqué dans le tableau N°4 :

**Tableau N°4**

| Variante | Rigidité de dérive (daN/° dérive) | Rigidité de dérive base 100 |
|---|---|---|
| Frettage avec nappes | 9335 | 100 |
| Frettage avec bandelette | 10958 | 117 |

## Revendications

1. **-** Pneumatique (1) pour véhicule lourd de type génie civil comprenant :
- une armature de sommet (3), radialement intérieure à une bande de roulement (2) et radialement extérieure à une armature de carcasse (4) ;
- l'armature de sommet (3) comprenant une armature de protection (5), une armature de travail (6) et une armature de frettage (7) ;
- l'armature de protection (5), la plus radialement extérieure dans l'armature de sommet (3), comprenant au moins une couche de protection (51, 52), la couche de protection (51, 52) comprenant des renforts métalliques formant, avec une direction circonférentielle (XX') tangente à la circonférence du pneumatique, un angle au moins égal à 10° ;
- l'armature de travail (6) comprenant au moins deux couches de travail (61, 62), chaque couche de travail (61, 62) comprenant des renforts métalliques formant, avec la direction circonférentielle (XX'), un angle au moins égal à 15° et au plus égal à 45°et croisés d'une couche de travail à la suivante,
- l'armature de frettage (7) ayant une largeur axiale au plus égale à la plus petite largeur axiale (L61, L62) des deux couches de travail (61, 62), comprenant au moins deux couches de frettage (71, 72) qui sont formées à partir de bandelettes constituées chacune de renforts métalliques élastiques qui font avec la direction circonférentielle (XX'), un angle au plus égal à 2.5°,
- lesdites bandelettes ayant une largeur axiale L8, et une tension répartie circonférentielle de rupture Nr,
- **caractérisé en ce que** chaque couche de frettage (71, 72) est constituée d'une juxtaposition axiale de spires jointives d'une bandelette (8), enroulées circonférentiellement autour de la première couche de travail (51), radialement, la plus intérieure de l'armature de travail, **en ce que** la bandelette comprend au moins 8, et au plus 30 renforts métalliques consécutifs parallèles enrobés dans un mélange élastomérique, **et en ce que** la tension répartie de rupture Nr de la bandelette (8), dans la direction circonférentielle, est au moins égale à 100 daN/mm.

2. - Pneumatique (1) pour véhicule lourd de type génie civil selon la revendication 1, **dans lequel** la largeur de la bandelette (8) est au moins égale à 35 mm, et au plus égale à 252 mm.

3. - Pneumatique (1) pour véhicule lourd de type génie civil selon les revendications 1 à 2, **dans lequel** le diamètre des renforts de la bandelette (8) est au moins égale à 1.9 mm.

4. - Pneumatique (1) pour véhicule lourd de type génie civil selon les revendications 1 à 3, **dans lequel** la distance mesurée entre deux renforts de la bandelette dans une coupe méridienne est au moins égale à 2.5 mm.

5. - Pneumatique (1) pour véhicule lourd de type génie civil selon les revendication 1 à 4, **dans lequel** le mélange élastomérique d'enrobage des renforts métalliques de la bandelette a une perte viscoélastique Tg δ inférieure ou égale 0.09.

6. - Pneumatique (1) pour véhicule lourd de type génie civil selon l'une des revendications 1 à 5, **dans lequel** les renforts métalliques de la bandelette (8) sont des câbles multitorons de structure 1xN comprenant une unique couche de N torons enroulés en hélice, chaque toron comprenant une couche interne de M fils internes enroulés en hélice et une couche externe de P fils externes enroulés en hélice autour de la couche interne.

7. - Pneumatique (1) pour véhicule lourd de type génie civil selon la revendication 6, **dans lequel** N=3 ou N=4, de préférence N=4.

8. - Pneumatique (1) pour véhicule lourd de type génie civil selon l'une des revendications 6 ou 7, **dans lequel** M=3, 4 ou 5, de préférence M=3.

9. - Pneumatique (1) pour véhicule lourd de type génie civil selon l'une quelconque des revendications 6 à 8, **dans lequel** P=7, 8, 9, 10 ou 11, de préférence P=8.

10. - Procédé de fabrication d'un pneumatique selon l'une quelconque des revendications 1 à 9 comprenant une étape de réalisation de l'armature de frettage (7) **dans laquelle,** pour chaque couche de frettage (71, 72), sont successivement réalisés un premier tour complet d'enroulement circonférentiel de la bandelette (8) au niveau d'une première extrémité axiale de la couche de frettage, puis un enroulement hélicoïdal jointif de la bandelette (8), selon la direction axiale jusqu'à une deuxième extrémité axiale de la couche de frettage, et un dernier tour complet d'enroulement circonférentiel de la bandelette (8) au niveau de la deuxième extrémité axiale de la couche de frettage.

## Patentansprüche

1. Reifen (1) für Tiefbau-Schwerlastfahrzeug, umfassend:
- eine Scheitelbewehrung (3) radial innen zu einem Laufstreifen (2) und radial außen zu einer Karkassenbewehrung (4);
- wobei die Scheitelbewehrung (3) eine Schutzbewehrung (5), eine Arbeitsbewehrung (6) und eine Umreifungsbewehrung (7) umfasst;
- wobei die radial äußerste Schutzbewehrung (5) in der Scheitelbewehrung (3) mindestens eine Schutzschicht (51, 52) umfasst, wobei die Schutzschicht (51, 52) Metallverstärkungen umfasst, die mit einer Umfangsrichtung (XX'), die zum Umfang des Reifens tangential verläuft, einen Winkel von mindestens gleich 10° bilden;
- wobei die Arbeitsbewehrung (6) mindestens zwei Arbeitsschichten (61, 62) umfasst, wobei jede Arbeitsschicht (61, 62) Metallverstärkungen umfasst, die mit der Umfangsrichtung (XX'), einen Winkel von mindestens gleich 15° und höchstens gleich 45° bilden und von einer Arbeitsschicht zur nächsten gekreuzt sind,
- wobei die Umreifungsbewehrung (7) eine axiale Breite aufweist, die höchstens gleich der kleinsten axialen Breite (L61, L62) der zwei Arbeitsschichten (61, 62) ist, mindestens zwei Umreifungsschichten (71, 72) umfasst, die aus Streifen gebildet sind, die jeweils von elastischen Metallverstärkungen gebildet sind, die mit der Umfangsrichtung (XX') einen Winkel von höchstens gleich 2,5° bilden,
- wobei die Streifen eine axiale Breite L8 und eine verteilte Umfangs-Reißspannung Nr aufweisen,
- **dadurch gekennzeichnet, dass** jede Umreifungsschicht (71, 72) von einer axialen Aneinanderreihung aneinander liegender Windungen eines Streifens (8) gebildet ist, die in Umfangsrichtung um die erste, radial innerste Arbeitsschicht (51) der Arbeitsbewehrung gewickelt sind, dadurch, dass der Streifen mindestens 8 und höchstens 30 aufeinanderfolgende parallele Metallverstärkungen umfasst, die in eine Elastomermischung eingebettet sind, und dadurch, dass die verteilte Umfangs-Reißspannung Nr des Streifens (8) in der Umfangsrichtung mindestens gleich 100 daN/mm ist.

2. Reifen (1) für Tiefbau-Schwerlastfahrzeug nach Anspruch 1, wobei die Breite des Streifens (8) mindestens gleich 35 mm und höchstens gleich 252 mm ist.

3. Reifen (1) für Tiefbau-Schwerlastfahrzeug nach Anspruch 1 bis 2, wobei der Durchmesser der Verstärkungen des Streifens (8) mindestens gleich 1,9 mm ist.

4. Reifen (1) für Tiefbau-Schwerlastfahrzeug nach Anspruch 1 bis 3, wobei der Abstand, der zwischen zwei Verstärkungen des Streifens in einem Meridianschnitt gemessen wird, mindestens gleich 2,5 mm ist.

5. Reifen (1) für Tiefbau-Schwerlastfahrzeug nach Anspruch 1 bis 4, wobei die Elastomermischung zur Einbettung der Metallverstärkungen des Streifens einen Viskoelastizitätsverlust Tg δ kleiner als oder gleich 0,09 aufweist.

6. Reifen (1) für Tiefbau-Schwerlastfahrzeug nach einem der Ansprüche 1 bis 5, wobei die Metallverstärkungen des Streifens (8) Mehrlitzenseile mit einer 1xN-Struktur sind, die eine Einzelschicht aus N Litzen umfassen, die spiralförmig gewickelt sind, wobei jede Litze eine Innenschicht aus M Innendrähten, die spiralförmig gewickelt sind, und eine Außenschicht aus P Außendrähten, die spiralförmig um die Innenschicht gewickelt sind, umfasst.

7. Reifen (1) für Tiefbau-Schwerlastfahrzeug nach Anspruch 6, wobei N=3 oder N=4, vorzugsweise N=4.

8. Reifen (1) für Tiefbau-Schwerlastfahrzeug nach einem der Ansprüche 6 oder 7, wobei M=3, 4 oder 5, vorzugsweise M=3.

9. Reifen (1) für Tiefbau-Schwerlastfahrzeug nach einem der Ansprüche 6 bis 8, wobei P=7, 8, 9, 10 oder 11, vorzugsweise P=8.

10. Verfahren zur Fertigung eines Reifens nach einem der Ansprüche 1 bis 9, umfassend einen Schritt des Herstellens der Umreifungsbewehrung (7), bei dem für jede Umreifungsschicht (71, 72) nacheinander eine erste vollständige Umwicklung des Streifens (8) in Umfangsrichtung an einem ersten Axialende der Umreifungsschicht, dann eine fugendichte spiralförmige Umwicklung des Streifens (8) in der Axialrichtung bis zu einem zweiten Axialende der Umreifungsschicht, und eine letzte vollständige Umwicklung des Streifens (8) in Umfangsrichtung am zweiten Axialende der Umreifungsschicht durchführt werden.

## Claims

1. **-** Tyre (1) for a heavy duty civil engineering type vehicle, comprising:
- a crown reinforcement (3), radially on the inside of a tread (2) and radially on the outside of a carcass reinforcement (4);
- the crown reinforcement (3) comprising a protective reinforcement (5), a working reinforcement (6) and a hooping reinforcement (7);
- the protective reinforcement (5), which is radially outermost in the crown reinforcement (3), comprising at least one protective layer (51, 52), the protective layer (51, 52) comprising metal reinforcers that form an angle at least equal to 10° with a circumferential direction (XX') tangential to the circumference of the tyre;
- the working reinforcement (6) comprising at least two working layers (61, 62), each working layer (61, 62) comprising metal reinforcers that form an angle at least equal to 15° and at most equal to 45° with the circumferential direction (XX') and are crossed from one working layer to the next;
- the hooping reinforcement (7) having an axial width at most equal to the smallest axial width (L61, L62) of the two working layers (61, 62), comprising at least two hooping layers (71, 72) that are formed from strips each made up of elastic metal reinforcers that form an angle at most equal to 2.5° with the circumferential direction (XX');
- said strips having an axial width L8 and a circumferential distributed breaking tension Nr;
- **characterized in that** each hooping layer (71, 72) is made up of an axial juxtaposition of contiguous turns of a strip (8), which are circumferentially wound around the first working layer (51), radially innermost in the working reinforcement, **in that the** strip comprises at least 8 and at most 30 parallel, consecutive metal reinforcers coated in an elastomeric compound, **and in that** the distributed breaking tension Nr of the strip (8), in the circumferential direction, is at least equal to 100 daN/mm.

2. -Tyre (1) for a heavy duty civil engineering type vehicle according to Claim 1, **wherein** the width of the strip (8) is at least equal to 35 mm and at most equal to 252 mm.

3. - Tyre (1) for a heavy duty civil engineering type vehicle according to Claims 1 to 2, **wherein** the diameter of the reinforcers of the strip (8) is at least equal to 1.9 mm.

4. -Tyre (1) for a heavy duty civil engineering type vehicle according to Claims 1 to 3, **wherein** the distance measured between two reinforcers of the strip in a meridian section is at least equal to 2.5 mm.

5. - Tyre (1) for a heavy duty civil engineering type vehicle according to Claims 1 to 4, **wherein** the elastomeric coating compound of the metal reinforcers of the strip has viscoelastic loss Tg δ that is less than or equal to 0.09.

6. - Tyre (1) for a heavy duty civil engineering type vehicle according to Claims 1 to 5, **wherein** the metal reinforcers of the strip (8) are multistrand ropes of structure 1xN, comprising a single layer of N strands wound in a helix, each strand comprising an internal layer of M internal threads wound in a helix and an external layer of P external threads wound in a helix around the internal layer.

7. - Tyre (1) for a heavy duty civil engineering type vehicle according to Claim 6, **wherein** N=3 or N=4, preferably N=4.

8. - Tyre (1) for a heavy duty civil engineering type vehicle according to either Claim 6 or Claim 7, **wherein** M=3, 4 or 5, preferably M=3.

9. - Tyre (1) for a heavy duty civil engineering type vehicle according to any one of Claims 6 to 8, **wherein** P=7, 8, 9, 10 or 11, preferably P=8.

10. - Method for manufacturing a tyre according to any one of Claims 1 to 9, comprising a step of producing the hooping reinforcement (7), **in which,** for each hooping layer (71, 72) and successively, a first complete circumferential winding turn of the strip (8) is performed at a first axial end of the hooping layer, then contiguous helical winding of the strip (8) is performed in the axial direction up to a second axial end of the hooping layer, and a final complete circumferential winding turn of the strip (8) is performed at the second axial end of the hooping layer.
